# EUROPÄISCHE PATENTSCHRIFT

(11) **EP 0 677 242 B1**
(45) Veröffentlichungstag und Bekanntmachung des Hinweises auf die Patenterteilung: **23.12.1998**
(21) Anmeldenummer: 95102481.9
(22) Anmeldetag: 22.02.1995
(51) Int. Cl.: A01G 1/00, E04D 11/00

(54) **Vegetationssubstrat sowie Vegetationssystem zur Begrünung**
Planting substrate and system for covering with plants
Substrat de culture et système pour recouvrir de végétation

(30) Priorität: 16.04.1994 DE 4413260
(43) Veröffentlichungstag der Anmeldung: 18.10.1995
(73) Patentinhaber: Behrens, Wolfgang, D-27243 Gross Ippener (DE)
(72) Erfinder: Behrens, Wolfgang, D-27243 Gross Ippener (DE)
(74) Vertreter: Patentanwälte Thömen & Körner

(56) Entgegenhaltungen:
- EP-A- 0 183 639
- EP-A- 0 231 416
- WO-A-85/03842
- DE-A- 4 309 979
- DE-C- 3 233 016
- DE-C- 4 004 284
- FR-A- 2 615 689

## Beschreibung

Die Erfindung betrifft ein Vegetationssubstrat gemäß dem Oberbegriff des Patentanspruchs 1. Außerdem befaßt sich die Erfindung mit einem Vegetationssystem nach dem Oberbegriff des Patentanspruchs 16.

Vegetationssubstrate sowie Vegetationssysteme werden bekanntlich schon mit Erfolg in vielfältiger Weise angewendet, wobei vor allem das Gebiet der Dachbegrünungen zu nennen ist, die mit zunehmenden Umweltbewußtsein in den letzten Jahren eine große Bedeutung gewonnen haben. Dabei sind sowohl die intensive als auch die extensive Dachbegrünung gleichermaßen relevant.

Während die intensive Dachbegrünung pflegebedürftig ist und insbesondere auf eine mehr oder weniger regelmäßige Bewässerung angewiesen ist, zeichnet sich die extensive Dachbegrünung dadurch aus, daß sie praktisch selbsterhaltend ist und keiner bzw. nur sehr geringer Pflege bedarf.

In der Fachwelt sind die positiven Wirkungen von Dachbegrünungen seit längerer Zeit anerkannt. Folgende günstige Eigenschaften sind beispielhaft besonders hervorzuheben: Verbesserung der optischen Wirkung einsehbarer Dachflächen und damit die Vermittlung von Naturgefühl in einer versteinerten, technischen Umwelt; Ausgleich von Temperaturextremen im kleinklimatischen Bereich und Verminderung der Rückstrahlungsintensität; Einsparung von Energie durch Ausgleich von Temperaturextremen; Einschränkung der physikalischen und mechanischen Beanspruchung der jeweiligen Dachkonstruktion durch Temperaturausgleich; Erhöhung der Luftffeuchtigkeit sowie Rückgewinnung überbauter Flächen als Lebensraum für Pflanzen und Kleintiere und somit Erhöhung der ökologischen Qualität.

Für die Begrünung von Dächern oder auch anderen künstlichen Ebenen, aber auch von natürlichen Oberflächen, werden Vegetationsschichten als fertig begrünte Vegetationsmatten verwendet, die ein Vegetationssubstrat beinhalten.

Für die extensive Dachbegrünung ist hierzu durch die deutsche Patentschrift DE 32 33 016 C2 ein Vegetationssubstrat mit einem Gehalt an Lava, Sand und gemahlenem Blähton sowie gegebenenfalls mit weiteren Zuschlägen, insbesondere in Form von Torf, bekannt, welches zusätzlich Kalkschotter und Basalt enthält. Das bekannte Vegetationssubstrat ist strukturstabil und ermöglicht somit relativ geringe Substratschichtdicken. Letzteres ist von Bedeutung, um keine zu großen statischen Belastungen der Dachfläche hervorzurufen.

Neben den positiven Wirkungen der Dachbegrünung ist bisher allerdings ein anderer Aspekt unberücksichtigt geblieben, der die allgemeine Problematik der Schadstoffe betrifft. Vor allem in der Außenluft sind in letzter Zeit alarmierende Schadstoffwerte festgestellt worden. Besonders betroffen sind Großstädte, wo z.B. Autoabgase die Außenluft erheblich mit Schadstoffen belasten. Trotz vorgeschriebener Katalysatoren wird die Luft durch Benzol, Stickstoffdioxyd, Ruß usw. verunreinigt, und wiederholt ist in mehreren Städten schon unter extremen Bedingungen Smogalarm gegeben worden, weil die Schadstoffbelastung der Luft zu hoch war.

Auch in Industriegebieten oder in der Nähe von Raffinerien verdeutlichen Messungen die Belastung der Luft mit Schadstoffen aller Art. Zwar gibt es inzwischen für die Industriebetriebe gewisse Auflagen, allerdings hat sich gezeigt, daß die entsprechenden Maßnahmen bei weitem nicht ausreichen, um die Luft von den gesundheitsschädigenden Schadstoffen zu befreien. Zudem sind die zur Anwendung gelangenden Filtersysteme sehr aufwendig und kostenintensiv.

Die Erfindung geht von dem grundlegenden neuen Gedanken aus, die positiven Wirkungen der Dachbegrünung zu erweitern und mit der Schadstoffbekämpfung zu verknüpfen. Nachdem inzwischen nämlich die Dachbegrünungen auch sehr großflächig vorgenommen werden, soll ein Ansatzpunkt gefunden werden, Dachbegrünungssysteme zur Schadstoffbekämpfung heranzuziehen.

Durch die Offenlegungsschrift DE 43 09 979 A1 ist eine Vorrichtung zum Reinigen und Befeuchten von Luft, insbesondere Raumluft, mittels dem Wurzelwerk bestimmter Pflanzen und/oder dort angesiedelter Mikroorganismen bekannt. Dabei ist ein elektrisch angetriebener Lüfter und ein nach oben offener und mit einer geeigneten Füllung versehener Pflanzenbehälter vorgesehen, wobei die zu reinigende und zu befeuchtende Luft an geeigneter Stelle außerhalb des Pflanzenbehälters angesaugt und an das Behälterinnere abgegeben wird.

Der Pflanzenbehälter ist in dem Gehäuse angeordnet und im unteren Innenbereich des Pflanzenbehälters ist ein Luftverteilelement zum Verteilen der vom Lüfter angesaugten Luft vorgesehen. Ferner besitzt das Gehäuse eine aus dem Gehäuse herausnehmbare Arbeitseinheit, auf welcher der Lüfter, eine elektronische Steuerung für einen Tag/Nacht-Rhytmus und ein Wasserstandsanzeiger sowie ein Bedienelement angeordnet sind.

Als Füllung für den Pflanzenbehälter sind in dessen Bodenbereich bis zur Oberkante des Lüfterverteilerelementes ein grobkörniges poröses Material und darüber zur Aufnahme des Pflanzenballens eine Mischung aus Aktivkohle, Lavastein und wasserspeichernden Tongranulat vorgesehen, wobei der Zweck dieser Füllung nicht näher beschrieben ist.

Insgesamt ist die bekannte Vorrichtung zum Reinigen und Befeuchten von Luft, insbesondere Raumluft, so ausgestaltet, daß auf die Verwendung eines separaten Filters verzichtet werden kann, und daß trotzdem eine ausreichende Reinigung und Belüftung stattfindet, ohne daß die Luftfeuchtigkeit der austretenden Luft eine bestimmte Obergrenze überschreitet.

Nachdem sich die bekannte Vorrichtung vornehmlich mit der Reinigung und der Befeuchtung von Raumluft innerhalb geschlossener Räume befaßt, und nachdem zur Realisierung ein Pflanzenbehälter sowie eine elektronische Steuerung, ein Wasserstandsanzeiger und schließlich auch noch ein Luftverteilelement erforderlich sind, kann sie für die weiter oben angesprochene Problematik der Schadstoffbeseitigung von Außenluft nicht herangezogen werden.

Einerseits liegt der Ansatzpunkt der Erfindung nicht darin, die Luft zu befeuchten, und andererseits eignet sich die bekannte Vorrichtung nicht für Außenluft, weil dort die Luftmengen um ein Vielfaches größer sind als innerhalb geschlossener Räume. Schließlich ist der apparative Aufwand für den Pflanzenbehälter und für die elektrischen und mechanischen Teile der Vorrichtung unter wirtschaftlichen Aspekten nur für die Befeuchtung und Reinigung von Raumluft, also innerhalb geschlossener Räume, zu vertreten.

Der Erfindung liegt die Aufgabe zugrunde, ein Vegetationssubstrat der im Oberbegriff des Patentanspruchs 1 angegebenen Gattung zu schaffen, welches nach wie vor die an sich vorteilhafte Begrünung von künstlichen Ebenen oder von natürlichen Oberflächen mit Pflanzen ermöglicht, welches darüber hinaus aber zusätzlich auch wirksam zur Bekämpfung und zur Verringerung der Schadstoffbelastung der umgebenden Außenluft herangezogen werden kann.

Der Begriff des Vegetationssubstrats umfaßt bei der Erfindung ganz allgemein alle üblichen Substrate. So werden Vegetationssubstrate als Schüttgut oder Schüttstoff verwendet, und sie werden auch als Bestandteil einer Anspritzmasse eingesetzt, welche auf eine zu begrünende Fläche (z. B. Dächer) aufgespritzt werden. Außerdem werden Vegetationssubstrate auch als Bestandteile einer trockenen Bio-Masse eingesetzt, welche auch Saatgut enthält, und welche in trockener Form auf die zu begrünende Fläche aufgebracht wird, wie dies in dem deutschen Patent DE 40 04 284 C1 beschrieben ist.

Bei Dachbegrünungen ist es auch möglich, hygroskopische Mineralwolle in Form von Glaswolle oder Steinwolle zu verwenden. Dieser Mineralwolle werden Nährstoffe für Pflanzen beigegeben, und auch hier kann ein Vegetationssubstrat im Sinne der Erfindung verwendet werden.

Außerdem soll durch die Erfindung ein Vegetationssystem gemäß dem Oberbegriff des Patentanspruchs 16 geschaffen werden, mit der zusätzlich zur Begrünung ebenfalls eine Reinigung von Außenluft erzielbar ist.

Zur Lösung dieser Aufgabe sind erfindungsgemäß die im kennzeichnenden Teil der Patentansprüche 1 bzw. 16 beschriebenen Maßnahmen vorgesehen.

Durch die Erfindung läßt sich in neuartiger Weise die vorteilhafte Kombination einer Begrünung mit einer gleichzeitigen Reinigung der umgebenden Außenluft bzw. einer gleichzeitigen Schadstoffreduzierung und Beseitigung erzielen. Neben den an sich schon bekannten positiven Wirkungen der Begrünungen, insbesondere der Dachbegrünungen, kann mit den einfachen Merkmalen der Erfindung der zunehmenden Luftverschmutzung zusätzlich entgegengetreten werden, indem die hohe Schadstoffbelastung der Außenluft abgebaut bzw. wesentlich verringert wird.

Bei der Erfindung enthält das Vegetationssubstrat ein Material, welches schadstoffadsorbierend ist, zusätzlich oder alternativ enthält es ein schadstoffabbauendes Material, und zusätzlich oder alternativ ist ein Schadstoffe in unschädliche Stoffe umwandelndes Material - jeweils auf der Grundlage kohlenstoffhaltiger Stoffe - vorgesehen.

Dabei ist es wichtig, daß dem Vegetationssubstrat ganz gezielt und bewußt bestimmte Mikroorganismen zugeben sind, nämlich solche Mikroorganismen, die geeignet sind, ganz bestimmte und wählbare Schadstoffe abzubauen und/oder in unschädliche Stoffe umzuwandeln. Die Auswahl der Mikroorganismen erfolgt also in Abhängigkeit davon, welche Schadstoffe in der betreffenden Außenluft überwiegend vorhanden sind und abgebaut bzw. in unschädliche Stoffe umgewandelt werden sollen.

Von Bedeutung ist dabei die Kombination des genannten Materials mit den Mikroorganismen, und zwar im Zusammenhang mit den für die Begrünung zur Anwendung gelangenden Pflanzen. In Abhängigkeit des verwendeten Materials geht die Erfindung nämlich davon aus, daß auch die verwendeten Pflanzen ein wichtiger Bestandteil im Gesamtzusammenhang sind, und zwar insofern, als die Mikroorganismen die betreffenden Schadstoffe nicht nur abbauen oder umwandeln, sondern für die Pflanzen verfügbar machen, so daß die Pflanzen von den Mikroorganismen-Produkten leben können und diese Produkte verwerten. Dies ist von Vorteil, weil dadurch vermieden wird, daß sich die Produkte der die Schadstoffe bekämpfenden Mikroorganismen im Laufe der Zeit anlagern und das Vegetationssubstrat in unerwünschter Weise mit diesen Produkten überfrachten würden, wobei dann die Gefahr besteht, daß das Vegetationssubstrat übersättigt und dicht wird und somit seine Funktion als Nährboden für die Pflanzen einbüßen könnte.

Da die Umwandlungsprodukte, die aus dem Schadstoffabbau bzw. aus der Schadstoffumwandlung herrühren, bei der Erfindung jedoch pflanzenverfügbar sind und die Pflanzen das aufnehmen, was die Mikroorganismen abscheiden, ist dieser möglichen Gefahr bei der Erfindung in vorteilhafter Weise wirksam begegnet.

Im Hinblick auf die bei der Erfindung zur Anwendung kommenden Mikroorganismen wird nicht verkannt, daß sich solche bei einer bestehenden Dachbegrünung zwar im Laufe der Zeit naturbedingt immer in gewissen Grenzen ansiedeln können. Entscheidend für die gestellte Aufgabe ist jedoch, daß dem Vegetationssubstrat von Anfang an ganz gezielt und bewußt bestimmte Mikroorganismen beigegeben werden. Hierbei handelt es sich um eine Maßnahme, die bisher nicht zum Tragen gekommen ist. Durch die gezielte Beigabe ganz bestimmter und ausgewählter Mikroorganismen zu dem Vegetationssubstrat wird gewährleistet, daß tatsächlich von Anfang an - sobald eine Begrünung fertiggestellt ist - in angestrebter Weise die Schadstoffbelastung der Außenluft bekämpft werden kann. Dabei wird man in dem Vegetationssubstrat also solche Pflanzen kultivieren, die in der Lage sind, Schadstoffe selbst oder die Produkte der mikrobiellen Umwandlung (durch die Einwirkung der Mikroorganismen) von Schadstoffen in ihrer Gesamtheit zu verarbeiten, in unschädliche Stoffe umzuwandeln, und/oder die Stoffe abzubauen.

Nachdem Begrünungen generell, und insbesondere Dachbegrünungen, heute schon in erheblichem Umfang großflächig vorgenommen werden, lassen sich entsprechend hohe Wirkungsgrade beim Schadstoffabbau bzw. bei der Schadstoffreduzierung der Außenluft erzielen. Vorteilhaft ist die Verwendung von Begrünungen in Gewerbe- und Industriegebieten, wo die Schadstoffbelastung der Außenluft besonders hoch ist. Denkbar ist aber auch eine Anwendung bei verschlossenen bzw. abgedichteten Mülldeponien, die beispielsweise mit einer Folie abgedichtet sind, auf die dann im Sinne der Erfindung eine Begrünung vorgenommen wird, um die von der Deponie herrührenden Schadstoffe abzubauen.

Für die Begrünung lassen sich beispielsweise bei Tankstellen, wo Schadstoffe wie Benzol auftreten, als Pflanzen Efeu verwenden, im Zusammenhang mit gezielt ausgewählten Mikroorganismen, welche besonders geeignet und in der Lage sind, Benzol abzubauen bzw. zu bekämpfen. Man wird also sowohl die Pflanzen als auch die jeweils verwendeten Mikroorganismen bevorzugt danach wählen und ausrichten, welche konkreten Schadstoffe an der betreffenden Stelle überwiegend auftreten.

Die Mikroorganismen sind lebend konserviert. Bei Einwirkung bzw. Zutritt von Wasser werden sie aktiviert, und bei Versorgung mit Sauerstoff beginnen die Mikroorganismen, die Schadstoffe in unschädliche Stoffe umzuwandeln und/oder abzubauen. Dieser Prozeß fördert seinerseits das Wachstum der Mikroorganismen selbst, und es können so viele Mikroorganismen entstehen, daß sie sich von dem Träger - also dem Material - ablösen, so daß auch eine Schadstoffbekämpfung bzw. ein Schadstoffabbau in der Umgebung des Materials erfolgt.

Gemäß einer vorteilhaften Weiterbildung der Erfindung ist das verwendete Material mit dem Vegetationssubstrat über die gesamte Dicke vermischt, so daß das Material seine Wirkung überall entfalten kann, denn das strukturstabile Vegetationssubstrat zeichnet sich durch ein großes Luftvolumen aus. Daher kann die mit Schadstoffen belastete Luft überall - hinsichtlich der gesamten Schichtdicke - hingelangen.

Eine andere zweckmäßige Ausgestaltung sieht vor, das Material schichtförmig zu verwenden, und zwar entweder als Schicht oberhalb auf dem Vegetationssubstrat, oder als Schicht innerhalb des Vegetationssubstrats oder auch unter dem Vegetationssubstrat. Auch in diesen Fällen läßt sich die erfindungsgemäße Aufgabe lösen. Dabei ist es zweckmäßig, die oberhalb aufgebrachte Schicht bereits vor der Verlegung der vorkultivierten Vegetationsmatte vorzusehen.

In einer anderen zweckmäßigen Ausgestaltung der Erfindung wird für das Material Aktivkohle benutzt. Bei der Aktivkohle handelt es sich um einen hochporösen reinen Kohlenstoff mit großer Oberfläche, der durch eine geeignete Verkohlung von Holz, Torf, Braunkohle usw. gewonnen wird. Die Aktivkohle dient als Träger und/oder Zwischenspeicher bzw. als Nahrungsspeicher für die Mikroorganismen, welche die gespeicherten Schadstoffe verwerten können. Die in der Außenluft befindlichen Schadstoffmoleküle werden nämlich an die Aktivkohle angelagert.

Eine andere vorteilhafte Weiterbildung der Erfindung besteht darin, daß an die innere und/oder äußere Oberfläche des Materials Stoffe imprägniert und/oder aufgesprüht sind, die eine Verbesserung der Schadstoffoxidation durch katalytische Unterstützung des Materials von Schadstoffoxidationen bewirken.

Hierbei wird die Eigenschaft ausgenutzt, daß Aktivkohle die Fähigkeit besitzt, die Oxidation von organischen und anorganischen Verbindungen katalytisch zu beschleunigen, wobei diese Wirkung als Oxidationskatalysator z.B. durch eine Imprägnierung mit dem Promotor Kaliumjodid verstärkt werden kann. Die Aktivkohle wirkt dabei praktisch als ein Katalysator. Dies Ausgestaltung der Erfindung ist von besonderem Vorteil, wenn es sich bei dem betreffenden Schadstoff um Ozon handelt.

Weitere zweckmäßige Ausgestaltungen der Erfindung sind in den Unteransprüchen angegeben und der nachfolgenden Beschreibung zu entnehmen.

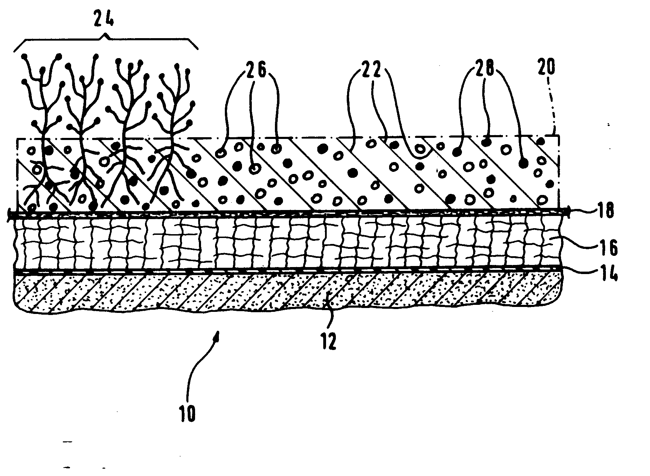

Anhand des in der Zeichnung dargestellten Ausführungsbeispiels wird die Erfindung näher erläutert. In der Zeichnung ist in einer schematischen Querschnittsansicht der Aufbau eines Vegetationssystems für eine Dachbegrünung dargestellt.

Der Aufbau 10 befindet sich auf einer künstlichen Ebenen in Form eines Daches 12, welches mit einer Abdichtung 14 versehen ist.

Das eigentliche Vegetationssystem umfaßt eine untere an sich bekannte Strukturmatte 16, die als Drainageschicht wirkt und zugleich auch eine Belüftung gewährleistet. Auf der oberen Seite der Strukturmatte 16 ist eine Trennschicht 18 vorgesehen, beispielsweise in Form eines üblichen Vlieses.

In der Zeichnung ist durch die strichpunktierte Linie 20 der eigentliche Vegetationskörper angedeutet, und durch die Schraffur ist das Vegetationssubstrat 22 dargestellt. Dieses Vegetationssubstrat 22 enthält neben seinem übliche Aufbau zusätzlich Aktivkohle 26 sowie Mikroorganismen 28. In üblicher Weise dient das Vegetationssubstrat 22 als Nährboden für die Pflanzen 24.

Durch die strichpunktierte Linie ist in der Zeichnung angedeutet, daß es sich bei dem Vegetationskörper sowohl um eine bereits mit Pflanzen vorkultivierte Vegetationsmatte als auch um eine auf die Trennschicht 18 aufgebrachte Schicht des Vegetationssubstrats 22 handeln kann. Die letzte Variante wird man bevorzugen, wenn die eigentliche Begrünung direkt am betreffenden Ort erfolgen soll. Die Substratschichtdicke liegt bei 0,5 cm und größer, weil sich dünnere Schichten als nicht so wirksam erwiesen haben.

In dem in der Zeichnung dargestellten Ausführungsbeispiel handelt es sich um ein strukturstabiles Vegetationssubstrat 22 bei einer extensiven, also pflegearmen, Dachbegrünung. Durch die Strukturstabilität des Vegetationssubstrats 22 und auch durch die Strukturmatte 16 ist dabei eine ausreichende Belüftung des Gesamtaufbaus gewährleistet.

Die Mikroorganismen 28 sowie die Aktivkohle 26 sind mit dem Vegetationssubstrat 22 vermischt. Die Mikroorganismen sind lebend konserviert und werden bei Zutritt von Wasser aktiviert und beginnen bei Versorgung mit Sauerstoff den gewünschten Abbau der zu bekämpfenden Schadstoffe. Dabei dient die vorhandene Aktivkohle 26 als Nahrungsspeicher für die Mikroorganismen 28. Die Auswahl der Mikroorganismen 28, die dem Vegetationssubstrat 22 gezielt von Anfang an zugegeben werden, richtet sich danach, welche Schadstoffe in der Außenluft bekämpft bzw. reduziert werden sollen. Hierfür stehen eine Vielzahl bekannter Mikroorganismen zur Verfügung.

In einem Ausführungsbeispiel der Erfindung ist vorgesehen, daß das Vegetationssubstrat 22 eine Schichtdicke von 2 cm besitzt. Dabei sind dem Vegetationssubstrat 22 mindestens 4 kg des mit Mikroorganismen 28 versehenen Materials 26 pro 1 m³ des Vegetationssubstrats 22 zugegeben. Die Erfindung ist jedoch nicht auf diese Zahlenwerte beschränkt. In der Praxis sind durchaus Abweichungen möglich, wobei man sich immer in Abhängigkeit der Schichtdicke des Vegetationssubstrats danach richten wird, welche Schadstoffe abgebaut werden sollen, und in welcher Konzentration diese erwartungsgemäß auftreten.

## Patentansprüche

1. Vegetationssubstrat (22), insbesondere strukturstabiles Vegetationssubstrat, für Vegetationsschichten (20, 24) als Schüttgut bzw. Schüttstoff, oder als Bestandteil einer Anspritzmasse oder einer trockenen Bio-Masse, welche auch Saatgut enthält, oder als Substrat in fertig begrünten Vegetationsmatten ab einer Substratschichtdicke von etwa 0,5 cm zur Begrünung von künstlichen Ebenen (12) wie z. B. Dächer, oder von natürlichen Oberflächen mit Pflanzen, **dadurch gekennzeichnet**, daß das Vegetationssubstrat (22) schadstoffadsorbierendes und/oder schadstoffabbauendes und/oder Schadstoffe in unschädliche Stoffe umwandelndes Material (26) auf der Grundlage kohlenstoffhaltiger Stoffe enthält, und daß dem Vegetationssubstrat (22) gezielt solche Mikroorganismen (28) zugegeben sind, welche geeignet sind, bestimmte wählbare Schadstoffe abzubauen und/oder in unschädliche Stoffe umzuwandeln.

2. Vegetationssubstrat nach Anspruch 1, **dadurch gekennzeichnet**, daß das Material (26) mit dem Vegetationssubstrat (22) vermischt ist.

3. Vegetationssubstrat nach Anspruch 1, **dadurch gekennzeichnet**, daß das Material (26) als Schicht oberhalb auf dem Vegetationssubstrat (22) aufgebracht oder als Schicht innerhalb des Vegetationssubstrats (22) eingebracht oder unter dem Vegetationssubstrat (22) angeordnet ist.

4. Vegetationssubstrat nach einem oder mehreren der vorhergehenden Ansprüche 1 - 3, **dadurch gekennzeichnet**, daß das Material (26) auf Holzbasis beruht.

5. Vegetationssubstrat nach Anspruch 4, **dadurch gekennzeichnet**, daß das Material (26) durch Holzkohle gebildet ist.

6. Vegetationssubstrat nach einem oder mehreren der vorhergehenden Ansprüche 1 - 3, **dadurch gekennzeichnet**, daß das Material (26) auf Braunkohlenbasis und/oder Holzbasis beruht.

7. Vegetationssubstrat nach Anspruch 6, **dadurch gekennzeichnet**, daß das auf Braunkohlenbasis beruhende Material (26) durch Perlhumus gebildet ist.

8. Vegetationssubstrat nach einem oder mehreren der vorhergehenden Ansprüche 1 - 3, **dadurch gekennzeichnet**, daß das Material (26) auf Torfbasis und/oder Braunkohlenbasis und/oder Holzbasis beruht.

9. Vegetationssubstrat nach Anspruch 8, **dadurch gekennzeichnet**, daß das auf Torfbasis beruhende Material (26) durch Aktivkohle gebildet ist.

10. Vegetationssubstrat nach einem oder mehreren der vorhergehenden Ansprüche 1 - 9, **dadurch gekennzeichnet**, daß an die innere und/oder äußere Oberfläche des Materials (26) Stoffe imprägniert und/oder aufgesprüht sind, die eine Verbesserung durch katalytische Unterstützung des Materials (26) von Schadstoffoxidationen bewirken.

11. Vegetationssubstrat nach einem oder mehreren der vorhergehenden Ansprüche 1 - 10, **dadurch gekennzeichnet**, daß dem Vegetationssubstrat (22) bei einer Schichtdicke von 2 cm mindestens 4 kg des mit Mikroorganismen (28) versehenen Materials (26) pro 1 m³ des Vegetationssubstrats (22) zugegeben sind.

12. Vegetationssubstrat nach einem oder mehreren der vorhergehenden Ansprüche 1 - 11, **dadurch gekennzeichnet**, daß die Mikroorganismen (28) an dem Material (26) angelagert sind.

13. Vegetationssubstrat nach einem oder mehreren der vorhergehenden Ansprüche 1 - 12, **dadurch gekennzeichnet**, daß die verwendeten Mikroorganismen (28) lebend konserviert beigegeben sind.

14. Vegetationssusbrat nach einem oder mehreren der vorhergehenden Ansprüche 1 - 13, **dadurch gekennzeichnet**, daß die Mikroorganismen (28) PAK-Schadstoffe abbauende Mikroorganismen sind.

15. Vegetationssubstrat nach einem oder mehreren der vorhergehenden Ansprüche 1 - 13, **dadurch gekennzeichnet**, daß die Mikroorganismen (28) PCP-Schadstoffe abbauende Mikroorganismen sind.

16. Vegetationssystem (16, 18, 20) zur Begrünung von künstlichen Ebenen (12), wie z. B. Dächer, oder von natürlichen Oberflächen, wobei die Vegetationsanordnung (16, 18, 20) eine untere Drainage und Belüftungsschicht (16) mit einer oberen Trennschicht (18) umfaßt, auf der sich eine ein Vegetationssubstrat (22) enthaltende vorkultivierte Vegetationsschicht bzw. Vegetationsmatte (20, 24) befindet, oder auf der das Vegetationssubstrat (22) vorzugsweise als Schüttgut aufgebracht ist, **dadurch gekennzeichnet**, daß das Vegetationssubstrat (22) schadstoffadsorbierendes und/oder schadstoffabbauendes und/oder Schadstoffe in unschädliche Stoffe umwandelndes Material (26) auf der Grundlage kohlenstoffhaltiger Stoffe enthält, und daß dem Vegetationssubstrat (22) gezielt solche Mikroorganismen (28) zugegeben sind, welche geeignet sind, bestimmte wählbare Schadstoffe abzubauen und/oder in unschädliche Stoffe umzuwandeln.

17. Vegetationssystem nach Anspruch 16, **dadurch gekennzeichnet**, daß die Drainage- und Belüftungsschicht (16) eine Mindestschichtdicke von 1 cm besitzt.

18. Vegetationssystem nach Anspruch 16 und/oder 17, **dadurch gekennzeichnet**, daß die Drainage- und Belüftungsschicht (16) durch eine unter dem Handelsnamen "ENKAMAT" bekannte offenporige Strukturmatte gebildet ist.

19. Vegetationssystem nach einem oder mehreren der vorhergehenden Ansprüche 16 - 18, **dadurch gekennzeichnet**, daß das Material (26) mit dem Vegetationssubstrat (22) vermischt ist.

20. Vegetationssystem nach einem oder mehreren der vorhergehenden Ansprüche 16 - 18, **dadurch gekennzeichnet**, daß das Material (26) als Schicht oberhalb auf dem Vegetationssubstrat (22) aufgebracht oder als Schicht innerhalb des Vegetationssubstrats (22) eingebracht oder unter dem Vegetationssubstrat (22) angeordnet ist.

21. Vegetationssystem nach einem oder mehreren der vorhergehenden Ansprüche 16 - 20, **dadurch gekennzeichnet**, daß das Material (26) auf Holzbasis beruht.

22. Vegetationssystem nach Anspruch 21, **dadurch gekennzeichnet**, daß das Material (26) durch Holzkohle gebildet ist.

23. Vegetationssystem nach einem oder mehreren der vorhergehenden Ansprüche 16 - 21, **dadurch gekennzeichnet**, daß das Material (26) auf Braunkohlenbasis und/oder auf Holzbasis beruht.

24. Vegetationssystem nach Anspruch 23, **dadurch gekennzeichnet**, daß das auf Braunkohlenbasis beruhende Material (26) durch Perlhumus gebildet ist.

25. Vegetationssystem nach einem oder mehreren der vorhergehenden Ansprüche 16 - 21, **dadurch gekennzeichnet,** daß das Material (26) auf Torfbasis und/oder Braunkohlenbasis und/oder Holzbasis beruht.

26. Vegetationssystem nach Anspruch 25, **dadurch gekennzeichnet**, daß das auf Torfbasis beruhende Material (26) durch Aktivkohle gebildet ist.

27. Vegetationssystem nach einem oder mehreren der vorhergehenden Ansprüche 16 - 25, **dadurch gekennzeichnet,** daß an die innere und/oder äußere Oberfläche des Materials (26) Stoffe imprägniert und/oder aufgesprüht sind, die eine Verbesserung der katalytischen Unterstützung des Materials (26) von Schadstoffoxidationen bewirken.

28. Vegetationssystem nach einem oder mehreren der vorhergehenden Ansprüche 16 - 27, **dadurch gekennzeichnet**, daß dem Vegetationssubstrat (22) bei einer Schichtdicke von 2 cm mindestens 4 kg des mit Mikroorganismen (28) versehenen Materials (26) pro 1 m³ des Vegetationssubstrats (22) zugegeben sind.

29. Vegetationssystem nach einem oder mehreren der vorhergehenden Ansprüche 16 - 28, **dadurch gekennzeichnet**, daß die Mikroorganismen (28) an dem Material (26) angelagert sind.

30. Vegetationssystem nach einem oder mehreren der vorhergehenden Ansprüche 16 - 29, **dadurch gekennzeichnet**, daß die verwendeten Mikroorganismen (28) lebend konserviert beigegeben sind.

31. Vegetationssystem nach einem oder mehreren der vorhergehenden Ansprüche 16 - 30, **dadurch gekennzeichnet**, daß die Mikroorganismen (28) PAK-Schadstoffe abbauende Mikroorganismen sind.

32. Vegetationssystem nach einem oder mehreren der vorhergehenden Ansprüche 16 - 30, **dadurch gekennzeichnet**, daß die Mikroorganismen (28) PCP-Schadstoffe abbauende Mikroorganismen sind.

## Claims

1. Planting substrate (22), more particularly a structurally stable planting substrate, for planting layers (20, 24) as bulk material or as a component of a sprayed substance or a dry bio-substance, which also contains seeds, or as substrate in planting mats which are already covered with plants from a substrate layer thickness of approx. 0.5 cm for covering artificial surfaces (12) such, for example, as roofs, or natural surfaces with plants, characterised in that the planting substrate (12) contains a material (26) which absorbs and/or breaks down harmful substances and/or which converts harmful substances into harmless substances on the basis of carbonic substances, and that micro-organisms (28), suited to breaking down certain selectable harmful substances and/or converting these into harmless substances, are added to the planting substrate (22).

2. Planting substrate according to Claim 1, characterised in that the material (26) is mixed with the planting substrate (22).

3. Planting substrate according to Claim 1, characterised in that the material (26) is applied as a layer on top of the planting substrate (22) or is inserted as a layer within the planting substrate (22) or is positioned below the planting substrate (22).

4. Planting substrate according to one or more of the preceding Claims 1 - 3, characterised in that the material (26) is wood-based.

5. Planting substrate according to Claim 4, characterised in that the material (26) is made up of charcoal.

6. Planting substrate according to one or more of the preceding Claims 1 - 3, characterised in that the material (26) is brown coal and/or wood-based.

7. Planting substrate according to Claim 6, characterised in that the brown coal-based material (26) is made up of beaded humus.

8. Planting substrate according to one or more of the preceding Claims 1 - 3, characterised in that the material (26) is peat and/or brown coal and/or wood-based.

9. Planting substrate according to Claim 8, characterised in that the peat-based material (26) is made up of activated carbon.

10. Planting substrate according to one or more of the preceding Claims 1 - 9, characterised in that substances are impregnated and/or sprayed on at the inner and/or outer surface of the material (26), these substances effecting an improvement in the oxidation of harmful substances through catalytic support of the material (26).

11. Planting substrate according to one or more of the preceding Claims 1 - 10, characterised in that at a layer thickness of 2 cm at least 4 kg of the material (26) provided with micro-organisms (26) is added to the planting substrate (22) per 1 m³ of the planting substrate (22).

12. Planting substrate according to one or more of the preceding Claims 1 - 11, characterised in that the micro-organisms are taken up by the material (26).

13. Planting substrate according to one or more of the preceding Claims 1 - 12, characterised in that the micro-organisms (28) used are added in live-preserved form.

14. Planting substrate according to one or more of the preceding Claims 1 - 13, characterised in that the micro-organisms (28) are micro-organisms which break down PAH harmful substances.

15. Planting substrate according to one or more of the preceding Claims 1 - 13, characterised in that the micro-organisms (28) are micro-organisms which break down PCP harmful substances.

16. Planting system (16, 18, 20) for covering artificial surfaces (12) such, for example, as roofs, or natural surfaces with plants, whereby the planting arrangement (16, 18, 20) comprises a lower drainage and aeration layer (16) with an upper partition layer (18), on which the pre-cultivated planting layer or planting mat containing a planting substrate (22) is located, or to which the planting substrate (22) is applied, preferably in bulk form, characterised in that the planting substrate (22) contains material (26) which absorbs and/or breaks down harmful substances and/or which converts harmful substances into harmless substances on the basis of carbonic substances, and that micro-organisms (28), suited to breaking down certain selectable harmful substances and/or converting these into harmless substances, are added to the planting substrate (22).

17. Planting system according to Claim 16, characterised in that the drainage and aeration layer (16) has a minimum thickness of 1 cm.

18. Planting system according to Claim 16 and/or 17, characterised in that the drainage and aeration layer (16) comprises an open-pore structural mat known under the trade name 'ENKAMAT'.

19. Planting system according to one or more of the preceding Claims 16 - 18, characterised in that the material (26) is mixed with the planting substrate.

20. Planting system according to one or more of the preceding Claims 16 - 18, characterised in that the material (26) is applied as a layer on top of the planting substrate (22) or is inserted as a layer within the planting substrate (22) or is positioned below the planting substrate (22).

21. Planting system according to one or more of the preceding Claims 16 - 20, characterised in that the material (26) is wood-based.

22. Planting system according to Claim 21, characterised in that the material (26) is made up of charcoal.

23. Planting system according to one or more of the preceding Claims 16 - 21, characterised in that the material (26) is based on brown coal and/or wood.

24. Planting system according to Claim 23, characterised in that the material based on brown coal (26) is made up of beaded humus.

25. Planting system according to one or more of the preceding Claims 16 - 21, characterised in that the material (26) is based on peat and/or brown coal and/or wood.

26. Planting system according to Claim 25, characterised in that the peat-based material (26) is made up of activated carbon.

27. Planting system according to one or more of the preceding Claims 16 - 25, characterised in that substances are impregnated and/or sprayed on at the inner and/or outer surface of the material (26), these substances effecting an improvement in the oxidation of harmful substances through catalytic support of the material (26).

28. Planting system according to one or more of the preceding Claims 16 - 27, characterised in that at a layer thickness of 2 cm at least 4 kg of the material (26) provided with micro-organisms (26) is added to the planting substrate (22) per 1 m³ of the planting substrate (22).

29. Planting system according to one or more of the preceding Claims 16 - 28, characterised in that the micro-organisms are taken up by the material (26).

30. Planting system according to one or more of the preceding Claims 16 - 29, characterised in that the micro-organisms (28) used are added in live-preserved form.

31. Planting system according to one or more of the preceding Claims 16 - 30, characterised in that the micro-organisms (28) are micro-organisms which break down PAH harmful substances.

32. Planting system according to one or more of the preceding Claims 16 - 30, characterised in that the micro-organisms (28) are micro-organisms which break down PCP harmful substances.

## Revendications

1. Substrat de végétation (22), en particulier substrat de végétation à structure stable, pour des couches de végétation (20, 24) sous forme de produits en vrac ou produits de décharge, ou d'élément d'une masse de pulvérisation ou d'une biomasse sèche, qui contient aussi des semences, ou de substrat dans des nattes de végétation prêtes et gazonnées, à partir d'une épaisseur de couche de substrat d'environ 0,5 cm pour l'engazonnement de surfaces planes artificielles (12), comme par exemple des toitures ou de surfaces naturelles avec des plantes, **caractérisé en ce** que le substrat de végétation (22) contient un matériau (26) absorbant les produits polluants et/ou dégradant les produits polluants, et/ou transformant des produits polluants en produits non polluants sur la base de matière contenant du carbone, et en ce qu'au substrat de végétation (22) sont ajoutés des micro-organismes adaptés qui conviennent pour dégrader et/ou transformer en produits non polluants des produits polluants choisis de manière déterminée.

2. Substrat de végétation suivant la revendication 1, **caractérisé en ce** que le matériau (26) est mélangé avec le substrat de végétation (22).

3. Substrat de végétation suivant la revendication 1, **caractérisé en ce** que le matériau (26) est épandu en couche superficielle sur le substrat de végétation (22), ou introduit en couche à l'intérieur du substrat de végétation (22), ou installé sous le substrat de végétation (22).

4. Substrat de végétation suivant une ou plusieurs des revendications précédentes 1 à 3, **caractérisé en ce** que le matériau (26) est établi sur une base de bois.

5. Substrat de végétation suivant la revendication 4, **caractérisé en ce** que le matériau (26) est formé de charbon de bois.

6. Substrat de végétation suivant une ou plusieurs des revendications précédentes 1 à 3, **caractérisé en ce** que le matériau (26) est établi sur une base de lignite et/ou de bois.

7. Substrat de végétation suivant la revendication 6, **caractérisé en ce** que le matériau (26), établi sur une base de lignite, est formé d'humus perlé.

8. Substrat de végétation suivant une ou plusieurs des revendications précédentes 1 à 3, **caractérisé en ce** que le matériau (26) est établi sur une base de tourbe et/ou une base de lignite et/ou de bois.

9. Substrat de végétation suivant la revendication 8, **caractérisé en ce** que le matériau (26), établi sur une base de tourbe, est formé de charbon actif.

10. Substrat de végétation suivant une ou plusieurs des revendications précédentes 1 à 9, **caractérisé en ce** que, à la surface interne et/ou externe du matériau (26), sont imprégnés et/ou pulvérisés des produits qui entraînent une amélioration par soutien catalytique du matériau (26) des oxydations des produits polluants.

11. Substrat de végétation suivant une ou plusieurs des revendications précédentes 1 à 10, **caractérisé en ce** qu'au substrat de végétation (22) pour une épaisseur de couche de 2 cm, on ajoute au moins 4 kg du matériau (26) pourvu de micro-oraganismes (28) par m³ de substrat de végétation (22)

12. Substrat de végétation suivant une ou plusieurs des revendications précédentes 1 à 11, **caractérisé en ce** que les micro-organismes (28) sont fixés additivement sur le matériau (26).

13. Substrat de végétation suivant une ou plusieurs des revendications précédentes 1 à 12, **caractérisé en ce** que les micro-organismes (28) utilisés sont ajoutés conservés vivants.

14. Substrat de végétation suivant une ou plusieurs des revendications précédentes 1 à 13, **caractérisé en ce** que les micro-organismes (28) sont des micro-organismes dégradant les produits polluants PAK.

15. Substrat de végétation suivant une ou plusieurs des revendications précédentes 1 à 13, **caractérisé en ce** que les micro-organismes (28) sont des micro-organismes dégradant les produits polluants PCP.

16. Système de végétation (16, 18, 20) pour l'engazonnement de surfaces planes artificielles (12), comme par exemple des toitures, ou des surfaces naturelles, le dispositif de végétation (16, 18, 20) comprend un drainage inférieur et une couche d'aération (16) avec une couche de séparation supérieure (18) sur laquelle se trouve une couche de végétation ou une natte de végétation (20, 24) précultivées contenant un substrat de végétation, ou sur laquelle est apporté le substrat de végétation (22), de préférence sous forme de produit en vrac, **caractérisé en ce** que le substrat de végétation (22) contient un matériau (26) absorbant les produits polluants et/ou dégradant les produits polluants et/ou transformant des produits polluants en produits non polluants sur la base de matière contenant du carbone, et en ce qu'au substrat de végétation (22) sont ajoutés de tels micro-organismes adaptés qui conviennent pour dégrader et/ou transformer en produits non polluants des produits polluants choisis de manière déterminée.

17. Système de végétation suivant la revendication 16, **caractérisé en ce** que la couche de drainage et d'aération (16) consiste en une épaisseur de couche moyenne de 1 cm.

18. Système de végétation suivant la revendication 16 et/ou 17, **caractérisé en ce** que la couche de drainage et d'aération (16) est formée d'une natte structurelle à pores ouvertes connue sous le nom commercial "ENKAMT".

19. Système de végétation suivant une ou plusieurs des revendications 16 à 18, **caractérisé en ce** que le matériau (26) est mélangé avec le substrat de végétation (22).

20. Système de végétation suivant une ou plusieurs des revendications 16 à 18, **caractérisé en ce** que le matériau (26) est épandu en couche superficielle sur le substrat de végétation (22), ou introduit en couche à l'intérieur du substrat de végétation (22), ou installé sous le substrat de végétation (22).

21. Système de végétation suivant une ou plusieurs des revendications 16 à 20, **caractérisé en ce** que le matériau (26) est établi sur une base de bois.

22. Système de végétation suivant la revendication 21, **caractérisé en ce** que le matériau (26) est formé de charbon de bois.

23. Système de végétation suivant une ou plusieurs des revendications 16 à 21, **caractérisé en ce** que le matériau (26) est établi sur une base de lignite et/ou de bois.

24. Système de végétation suivant la revendication 23, **caractérisé en ce** que le matériau (26), établi sur une base de lignite, est formé d'humus perlé.

25. Système de végétation suivant une ou plusieurs des revendications 16 à 21, **caractérisé en ce** que le matériau (26) est établi sur une base de tourbe et/ou une base de lignite et/ou de bois.

26. Système de végétation suivant la revendication 25, **caractérisé en ce** que le matériau (26), établi sur une base de tourbe, est formé de charbon actif.

27. Système de végétation suivant une ou plusieurs des revendications 16 à 25, **caractérisé en ce** que, à la surface interne et/ou externe du matériau (26), sont imprégnés et/ou arrosés des produits qui entraînent une amélioration par soutien catalytique du matériau (26) des oxydations des produits polluants.

28. Système de végétation suivant une ou plusieurs des revendications 16 à 27, **caractérisé en ce** qu'au substrat de végétation (22) pour une épaisseur de couche de 2 cm, on ajoute au moins 4 kg du matériau (26) pourvu de micro-oraganismes (28) par m³ de substrat de végétation (22).

29. Système de végétation suivant une ou plusieurs des revendications 16 à 28, **caractérisé en ce** que les micro-organismes (28) sont fixés additivement sur le matériau (26).

30. Système de végétation suivant une ou plusieurs des revendications 16 à 29, **caractérisé en ce** que les micro-organismes (28) utilisés sont ajoutés conservés vivants.

31. Système de végétation suivant une ou plusieurs des revendications 16 à 30, **caractérisé en ce** que les micro-organismes (28) sont des micro-organismes dégradant les produits polluants PAK.

32. Système de végétation suivant une ou plusieurs des revendications 16 à 30, **caractérisé en ce** que les micro-organismes (28) sont des micro-organismes dégradant les produits polluants PCP.
